# EUROPEAN PATENT SPECIFICATION

(11) **EP 4 556 205 B1**
(45) Date of publication and mention of the grant of the patent: **11.11.2026**
(21) Application number: 25168000.5
(22) Date of filing: 19.05.2016
(51) Int. Cl.: B29C 70/08

(54) **NOODLE COMPRISED OF A MATRIX OF DISCONTINUOUS FILAMENTS**
NUDEL AUS EINER MATRIX DISKONTINUIERLICHER FILAMENTE
NOUILLES COMPOSÉES D'UNE MATRICE DE FILAMENTS DISCONTINUS

(30) Priority: 29.07.2015 US 201514812458
(43) Date of publication of application: 21.05.2025
(62) Document number(s) of the earlier application(s) in accordance with Art. 76 EPC: 16170468.9 / 3 141 377
(73) Proprietor: The Boeing Company, Arlington, VA 22202 (US)
(72) Inventor: Glynn, Andrew K., Arlington 22202 (US); Pook, David Andrew, Arlington 22202 (US); Georgiadis, Steve, Arlington 22202 (US); Meure, Samuel James, Arlington 22202 (US); Osborne, Max Marley, Arlington 22202 (US)
(74) Representative: Witte, Weller & Partner Patentanwälte mbB

(56) References cited:
- EP-A1- 2 764 987
- EP-A1- 2 894 025
- WO-A1-2010/144007
- US-A- 5 272 000
- US-A- 5 376 327
- US-A1- 2010 024 966

## Description

### BACKGROUND INFORMATION

### 1. Field:

The present disclosure relates generally to composite structures and, in particular, to fillers for filling voids in composite structures. Still more particularly, the present disclosure relates to fillers comprised of randomly oriented discontinuous filaments and a method and apparatus for manufacturing these types of fillers.

### 2. Background:

Composite structures are being increasingly used in various platforms, such as, but not limited to, aircraft, unmanned aerial vehicles, and other types of aerospace vehicles. A composite structure may be comprised of at least one composite part made of composite material. In some cases, when two or more composite parts are joined together, channels or voids may be created along the bond lines between these composite parts. These voids may need to be filled in order to increase the strength of the bond. A filler may be used to fill this type of void.

As one example, in the aircraft industry, when a composite stiffener is mated with a composite skin panel, a filler may be used to fill the void created at the radius bond line between the composite stiffener and the composite skin panel. This type of filler may sometimes be referred to as a "composite filler," a "noodle," or a "composite noodle."

Currently used fillers are oftentimes made from materials, such as adhesive, prepreg tape, fabric, or other types of composite materials. Further, fillers are made to have a desired level of stiffness. For example, a filler used between a composite stiffener and a composite skin panel may need to have a certain level of thickness to transfer loads from the composite stiffener to the composite skin panel.

During the manufacturing and operation of an aircraft, composite fillers in the aircraft may experience various forces. These forces may cause undesired inconsistencies to form within these composite fillers. For example, cracks, delamination, and other undesired inconsistencies may develop within a composite material. These types of undesired inconsistencies may prevent the composite filler from transferring loads in the desired manner. Therefore, it would be desirable to have a method and apparatus that take into account at least some of the issues discussed above, such as, but not limited to, preventing cracks in composite fillers, as well as other possible issues. EP2764987 Al according to its abstract discloses: A method of making a composite structure.

The method includes the step of applying chopped fiber material in varying thicknesses onto a first ply surface of a first composite charge to form a layered composite charge. The method further includes the step of folding the layered composite charge. The method further includes the step of assembling a second composite charge and the folded layered composite charge to form a composite structure. The chopped fiber material forms a gap filler in the composite structure. The gap filler conforms to a shape of the composite structure surrounding the gap filler. The method further includes processing the composite structure.

US5376327 A according to its abstract discloses: A method and apparatus of forming a preform of structural fibers includes a hermetically sealed housing for controlling air pressures and flow therein. A perforated screen is located within the housing separating same into a high pressure chamber and a low pressure chamber. Pressurized air is supplied to the high pressure chamber to agitate and randomize fibers, and a vacuum is provided in the low pressure chamber to draw and compact the fibers against the screen. The pressure differential between the chambers provides significant compaction of the fibers against the screen. A binder is applied to the fibers to maintain the shape of the preform.

### SUMMARY

The invention is defined by the method of claim 1 and the apparatus of claim 7.

In one illustrative embodiment, going beyond the scope of the appended claims, an apparatus may comprise a filler. The filler may comprise a fiber matrix that is uniform in all directions. The fiber matrix may comprise a first plurality of discontinuous filaments and a second plurality of discontinuous filaments. Each filament of the first plurality of discontinuous filaments may be comprised of a stiffening material. Each filament of the second plurality of discontinuous filaments may be comprised of a binding material. Discontinuous filaments of both the first plurality of discontinuous filaments and the second plurality of discontinuous filaments may be randomly oriented and entangled with each other.

In another illustrative embodiment, going beyond the scope of the appended claims, a method for manufacturing a filler for a composite structure may be provided. A first plurality of discontinuous filaments may be mixed with a second plurality of discontinuous filaments to form a mixture. Feedstock material may be formed using the mixture. The feedstock material may be compressed to form a feedstock. Discontinuous filaments of the first plurality of discontinuous filaments and the second plurality of discontinuous filaments within the feedstock may be randomly oriented and entangled with each other to form a fiber matrix that is uniform in all directions. The feedstock may be shaped to form a filler structure for use in forming the filler.

In yet another illustrative example, going beyond the scope of the appended claims, a fiber matrix may comprise a first plurality of discontinuous filaments and a second plurality of discontinuous filaments. Each filament of the first plurality of discontinuous filaments may be comprised of a stiffening material. Each filament of the second plurality of discontinuous filaments may be comprised of a binding material. Discontinuous filaments of both the first plurality of discontinuous filaments and the second plurality of discontinuous filaments may be randomly oriented and entangled with each other such that the fiber matrix is uniform in all directions.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a manufacturing environment in the form of a block diagram in accordance with an illustrative embodiment;
**Figure 2** is an illustration of a composite manufacturing system in greater detail in the form of a block diagram in accordance with an illustrative embodiment;
**Figure 3** is an illustration of an isometric view of a composite structure in accordance with an illustrative embodiment;
**Figure 4** is an illustration of an enlarged view of a portion of a fiber matrix in accordance with an illustrative embodiment;
**Figure 5** is an illustration of a feedstock and different types of fillers that may be made from the feedstock in accordance with an illustrative embodiment;
**Figure 6** is an illustration of one manner in which a filler may be formed in accordance with an illustrative embodiment;
**Figure 7** is an illustration of one manner in which a selected portion of feedstock may be formed in accordance with an illustrative embodiment;
**Figure 8** is an illustration of rollers being used to shape the edges of a selected portion of feedstock in accordance with an illustrative embodiment;
**Figure 9** is an illustration of rollers being used to shape the edges of a selected portion of feedstock in accordance with an illustrative embodiment;
**Figure 10** is an illustration of rollers being used to shape the edges of a selected portion of feedstock in accordance with an illustrative embodiment;
**Figure 11** is an illustration of a process for forming a filler for a void in a composite structure in the form of a flowchart in accordance with an illustrative embodiment;
**Figure 12** is an illustration of a process for forming a feedstock in the form of a flowchart in accordance with an illustrative embodiment;
**Figure 13** is an illustration of a more detailed process for forming a filler for a void in a composite structure in the form of a flowchart in accordance with an illustrative embodiment;
**Figure 14** is an illustration of an aircraft manufacturing and service method in the form of a block diagram in accordance with an illustrative embodiment; and
**Figure 15** is an illustration of an aircraft in the form of a block diagram in which an illustrative embodiment may be implemented.

### DETAILED DESCRIPTION

The illustrative embodiments recognize and take into account different considerations. For example, the illustrative embodiments recognize and take into account that it may be desirable to have a method and apparatus for manufacturing a composite filler that results in the composite filler having a desired resistance to undesired inconsistencies, such as cracking. The illustrative embodiments recognize and take into account that a composite filler made up of randomly oriented discontinuous filaments that are comprised of a stiffening material and discontinuous filaments that are comprised of a binding material may help improve the stiffness, toughness, and stability of the composite filler.

Thus, the illustrative embodiments provide a method and apparatus for manufacturing a composite filler that comprises a fiber matrix that is uniform in all directions in three dimensions. In one illustrative example, the fiber matrix may comprise a first plurality of discontinuous filaments and a second plurality of discontinuous filaments. Each filament of the first plurality of discontinuous filaments may be comprised of a stiffening material and each filament of the second plurality of discontinuous filaments may be comprised of a binding material. Filaments of both the first plurality of discontinuous filaments and the second plurality of discontinuous filaments may be randomly oriented and entangled with each other.

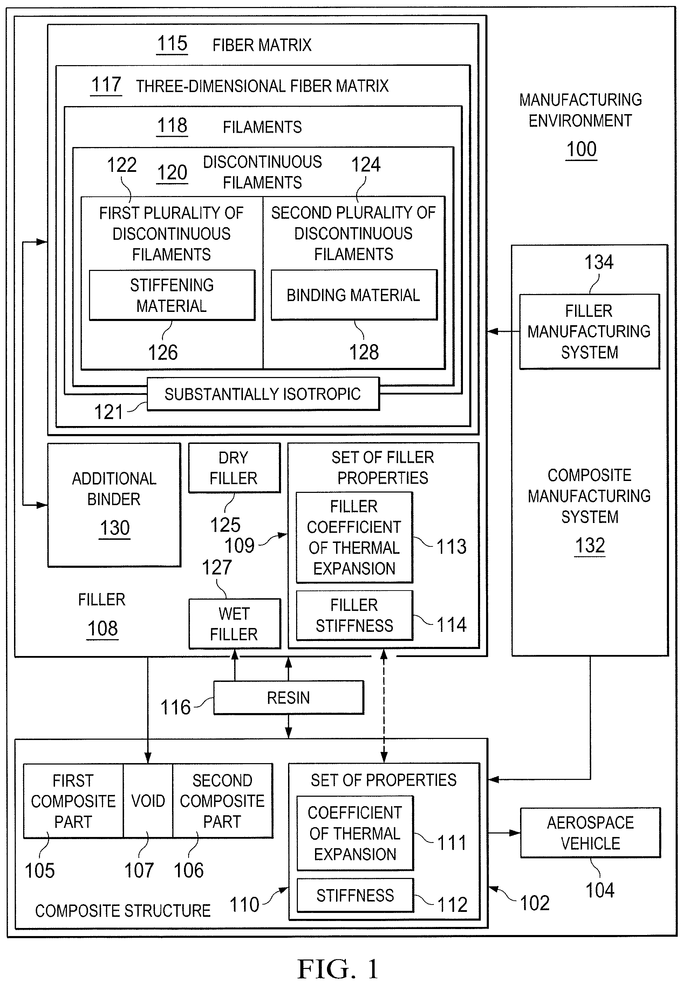

Referring now to the figures and, in particular, with reference to **Figure 1****,** an illustration of a manufacturing environment is depicted in the form of a block diagram in accordance with an illustrative embodiment. Manufacturing environment **100** may be an example of one environment in which composite structure **102** may be manufactured.

Composite structure **102** may be used in various different types of platforms. In one illustrative example, composite structure **102** may be used in aerospace vehicle **104.** Aerospace vehicle **104** may take the form of an aircraft, a helicopter, an unmanned aerial vehicle, a space shuttle, a space vehicle, or some other type aerospace vehicle. In other illustrative examples, composite structure **102** may be used in a ground vehicle, a water vehicle, a building, or some other type of platform.

Composite structure **102** may be comprised of at least two composite parts. For example, without limitation, composite structure **102** may include first composite part **105** and second composite part **106.** A composite part may be comprised of at least one of a ply, a resin-impregnated ply, a dry preform, a resin impregnated preform, or some other type or premanufactured article.

As used herein, the phrase "at least one of," when used with a list of items, means different combinations of one or more of the listed items may be used and only one of the items in the list may be needed. The item may be a particular object, thing, step, operation, process, or category. In other words, "at least one of" means any combination of items or number of items may be used from the list, but not all of the items in the list may be required.

For example, without limitation, "at least one of item A, item B, or item C" or "at least one of item A, item B, and item C" may mean item A; item A and item B; item B; item A, item B, and item C; or item B and item C. In some cases, "at least one of item A, item B, or item C" or "at least one of item A, item B, and item C" may mean, but is not limited to, two of item A, one of item B, and ten of item C; four of item B and seven of item C; or some other suitable combination.

In one illustrative example, first composite part **105** and second composite part **106** may be made from pre-impregnated fiber preforms. In another illustrative example, first composite part **105** and second composite part **106** may be made from dry fiber preforms or tacked together dry preforms that may be later infused with resin and cured to form a fully cured composite structure.

When first composite part **105** and second composite part **106** are mated together, void **107** may be formed between these two composite parts. Filler **108** may be used to substantially fill void **107.** In some cases, filler **108** may also be referred to as a composite filler, a noodle, or a composite noodle.

In these illustrative examples, filler **108** may be formed such that filler **108** has set of filler properties **109** that substantially match the set of properties **110** of composite structure **102.** For example, without limitation, set of properties **110** may include coefficient of thermal expansion **111** and stiffness **112.** Filler **108** may be formed such that set of filler properties **109** includes filler coefficient of thermal expansion **111** and filler stiffness **114** that substantially match coefficient of thermal expansion **111** and stiffness **112,** respectively, of composite structure **102.** In these illustrative examples, filler **108** may be formed such that filler **108** also has properties that match set of properties **110** of composite structure **102.** For example, without limitation, set of properties **110** may include at least one of toughness, density, or some other material property.

As depicted, filler **108** may be comprised of fiber matrix **115.** In some cases, resin **116** may be infused in filler **108** prior to or after filler **108** is collocated with first composite part **105** and second composite part **106.** Resin **116** may help toughen and strengthen filler **108.** Fiber matrix **115** may take the form of three-dimensional fiber matrix **117.** Fiber matrix **115** may be comprised of filaments **118.** In this illustrative example, filaments **118** are discontinuous filaments **120.** In some cases, discontinuous filaments **120** may also be referred to as chopped fibers.

Discontinuous filaments **120** may be fibers that do not extend the entire length or width of filler **108.** Discontinuous filaments **120** may include filaments of different sizes, different diameters, different cross-sectional shapes, different types, or some combination thereof. In one illustrative example, each of discontinuous filaments **120** may have a length of about at least one millimeter.

Further, discontinuous filaments **120** may be randomly oriented relative to each other and entangled with each other such that fiber matrix **115** is substantially isotropic **121.** Being substantially isotropic **121** means that fiber matrix **115** is uniform in all directions, within selected tolerances. In other words, fiber matrix **115** may be substantially invariant with respect to direction.

In one illustrative example, discontinuous filaments **120** may include first plurality of discontinuous filaments **122** and second plurality of discontinuous filaments **124.** Each filament of first plurality of discontinuous filaments **122** may be comprised of stiffening material **126.** Consequently, in some cases, first plurality of discontinuous filaments **122** may also be referred to as a plurality of discontinuous stiffening filaments. Each filament of second plurality of discontinuous filaments **124** may be comprised of binding material **128.** Consequently, in some cases, second plurality of discontinuous filaments **124** may also be referred to as a plurality of discontinuous binding filaments.

The filaments of first plurality of discontinuous filaments **122** and second plurality of discontinuous filaments **124** may be randomly oriented and entangled with each other such that fiber matrix **115** is substantially isotropic **121.** In other words, the filaments of first plurality of discontinuous filaments **122** and second plurality of discontinuous filaments **124** may be randomly oriented and entangled with each other such that fiber matrix **115** is uniform in all directions, within selected tolerances.

Stiffening material **126** may be comprised of one or more materials that contribute to filler stiffness **114.** Stiffening material **126** may comprise, for example, without limitation, at least one of carbon, silica, glass, boron, a para-aramid synthetic fiber, a polyimide, a ceramic material, a metallic material or some other type of stiffening material.

Binding material **128** may be comprised of one or more materials that help bind discontinuous filaments **120** of filler **108** together. For example, binding material **128** may hold discontinuous filaments **120** together in response to at least one of heat, pressure, or a chemical reaction being applied to binding material **128.** Binding material **128** may also hold discontinuous filaments **120** together during handling. Additionally, binding material **128** may be used to bind filler **108** to composite structure **102.** Further, binding material **128** may help toughen, stiffen, and stabilize filler **108.**

Binding material **128** may comprise, for example, without limitation, at least one of a thermoplastic material, a thermoset material, or some other type of binding material. A thermoplastic material may comprise, for example, without limitation, an acrylic material, a fluorocarbon, a polyamide, a polyolefin such as polyethylene or polypropylene, a polyester, a polycarbonate, a polyurethane, a polyaryletherketone, or some other type of thermoplastic material. A thermoset material may comprise, for example, without limitation, a polyurethane, a phenolic material, a polymide, a sulphonated polymer, a conductive polymer, a benzoxazine, a bismaleimide, a cyanate esther, a polyester, an epoxy, a silsesquioxane, or some other type of thermoset material.

In these illustrative examples, fiber matrix **115** may be used as filler **108** prior to infusing resin **116** within fiber matrix **115.** In these examples, filler **108** may be referred to as dry filler **125.** Dry filler **108** may be inserted within void **107.**

In some cases, first composite part **105** and second composite part **106** may be dry preforms. After dry filler **125** is inserted into void **107,** resin **116** may be infused within first composite part **105,** second composite part **106,** and dry filler **125** to form composite structure **102,** which may then be cured. In some illustrative examples, the same or different types of resin may be infused within each of first composite part **105,** second composite part **106,** and dry filler **125.**

In other cases, first composite part **105** and second composite part **106** may be pre-impregnated with resin **116** but uncured. After dry filler **125** is inserted into void **107,** resin **116** may be infused within dry filler **125** located within void **107** to form composite structure **102,** which may then be cured. Resin **116** may be the same or different from the resin impregnated within first composite part **105** and second composite part **106.**

In other illustrative examples, resin **116** may be infused within fiber matrix **115** to form filler **108** prior to filler **108** being inserted within void **107.** In these examples, filler **108** may be referred to as wet filler **127.** As one illustrative example, resin **116** may be impregnated within fiber matrix **115.** Resin **116** may help further toughen and strengthen filler **108.** Once resin **116** has been infused within fiber matrix **115** to form wet filler **127,** wet filler **127** may be positioned relative to first composite part **105** and second composite part **106** to fill void **107.** Depending on the implementation, first composite part **105** and second composite part **106** may be dry preforms or resin-infused parts.

In this manner, resin **116** may be infused within filler **108** prior to the collocation of filler **108** with first composite part **105** and second composite part **106** during the manufacturing of composite structure **102.** Alternately, resin **116** may also be infused within filler **108** after the collocation of filler **108** with first composite part **105** and second composite part **106** during the manufacturing of composite structure **102.** The curing of composite structure **102** may be performed by applying at least one of heat, pressure, or a chemical reaction.

Resin **116** may comprise at least one of a thermoplastic material, a thermoset material, or some other type of material. Depending on the implementation, resin **116** may be comprised of multiple components, such as, for example, without limitation, at least one of a diluent, a catalyst, a monomer, an oligomer, a curative, particles, milled fibers, some other type of soluble or insoluble additive, or some other type of component.

The combination of discontinuous filaments **120** comprised of both stiffening material **126** and binding material **128,** as well as fiber matrix **115** being substantially isotropic **121,** may help strengthen filler **108** and make filler **108** resistant to undesired inconsistencies, such as cracking. For example, without limitation, filler **108** may be resistant to the cracking of resin **116** during curing, thermal cycling, or mechanical cycling.

In some illustrative examples, additional binder **130** may be added to fiber matrix **115** prior to resin **116.** Additional binder **130** may be, for example, without limitation, injected into fiber matrix **115** or applied directly to discontinuous filaments **120** prior to the forming of the three-dimensional fiber matrix **117.** Additional binder **130** may comprise at least one of, for example, without limitation, an adhesive material, a glue, a thermoplastic material, a polyetherimide, a thermoset material, or some other type of binding agent.

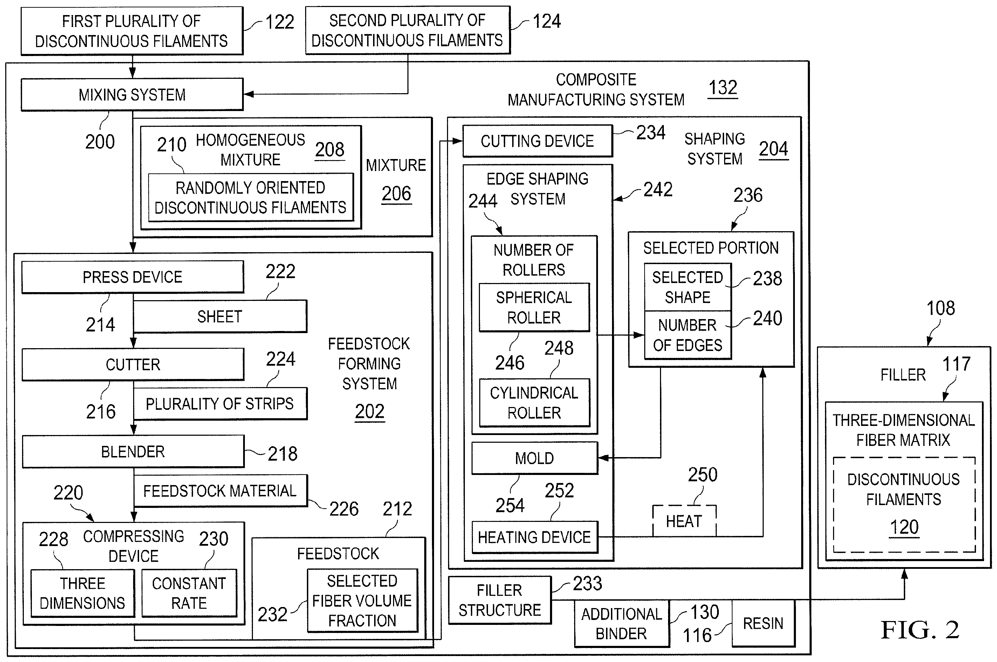

In one illustrative example, composite manufacturing system **132** may be used to manufacture composite structure **102.** Filler manufacturing system **134** may be part of composite manufacturing system **132.** In particular, filler manufacturing system **134** may be the portion of composite manufacturing system **132** used to manufacture filler **108.** Filler **108** may be manufactured in different ways using filler manufacturing system **134.** Composite manufacturing system **132** is described in greater detail in **Figure 2** below.

With reference now to **Figure 2****,** an illustration of composite manufacturing system **132** from **Figure 2** is depicted in greater detail in the form of a block diagram in accordance with an illustrative embodiment. Composite manufacturing system **132** may be used to manufacture filler **108** using first plurality of discontinuous filaments **122** and second plurality of discontinuous filaments **124.** In one illustrative example, composite manufacturing system **132** may include mixing system **200,** feedstock forming system **202,** and shaping system **204.**

Mixing system **200** may be used to mix first plurality of discontinuous filaments **122** and second plurality of discontinuous filaments **124** together to form mixture **206.** Mixing system **200** may mix first plurality of discontinuous filaments **122** and second plurality of discontinuous filaments **124** such that mixture **206** is a substantially homogenous mixture **208** comprised of randomly oriented discontinuous filaments **210.**

Feedstock forming system **202** may use mixture **206** to form feedstock **212.** Feedstock forming system **202** may be implemented in different ways. In one illustrative example, feedstock forming system **202** may include press device **214,** cutter **216,** blender **218,** and compressing device **220.**

Press device **214** may form sheet **222** using mixture **206.** For example, without limitation, press device **214** may apply pressure to mixture **206** to flatten mixture **206** out to form sheet **222.** Sheet **222** may be a thin veil of randomly oriented discontinuous filaments **210.**

Cutter **216** may be used to cut sheet **222** into plurality of strips **224.** In one illustrative example, the strips in plurality of strips **224** may have substantially uniform shapes and sizes. However, in other illustrative examples, plurality of strips **224** may be of different shapes, different sizes, or both.

Blender **218** may be used to mix plurality of strips **224** together to form feedstock material **226.** As one illustrative example, blender **218** may mix plurality of strips **224** at a high speed such that a wad of feedstock material **226** is formed. Feedstock material **226** may be substantially isotropic.

Compressing device **220** may then be used to compress feedstock material **226** to form the final feedstock **212.** For example, without limitation, compressing device **220** may compress feedstock material **226** with respect to three dimensions **228** at substantially constant rate **230** to form feedstock **212.** In particular, feedstock material **226** may be compressed with respect to three dimensions **228** at substantially constant rate **230** to form feedstock **212** having selected fiber volume fraction **232.** In one illustrative example, compression of feedstock material **226** may be performed isotatically, which may mean that equal pressure is applied to all sides of feedstock material **226.**

Selected fiber volume fraction **232** may be, for example, without limitation, between about 5 percent and 80 percent. In some cases, selected fiber volume fraction **232** may be preferably between about 20 percent and about 60 percent.

Once feedstock **212** has been fully formed, shaping system **204** may be used to form filler structure **233** using feedstock **212.** In one illustrative example, shaping system **204** includes cutting device **234.** Cutting device **234** may be used to cut out selected portion **236** of feedstock **212.**

For example, without limitation, cutting device **234** may be used to cut away a portion of feedstock **212** such that only selected portion **236** having selected shape **238** remains. Selected shape **238** may be a three-dimensional shape such as, for example, without limitation, a triangular-type prism, a hexagonal-type prism, a cylindrical shape, some other type of polyhedral shape, or some other type of three-dimensional shape.

In some illustrative examples, selected portion **236** of feedstock **212** having selected shape **238** forms filler structure **233.** However, in other illustrative examples, number of edges **240** of selected portion **236** of feedstock **212** may need to be further shaped in order to form filler structure **233.** Number of edges **240** may be shaped using, for example, edge shaping system **242.**

In one illustrative example, edge shaping system **242** may include number of rollers **244.** Number of rollers **244** may be rolled along number of edges **240** to shape number of edges **240.** Number of rollers **244** may include at least one of spherical roller **246,** cylindrical roller **248,** or some other type of roller. As one illustrative example, number of rollers **244** may be rolled along number of edges **240,** while heat **250** is being applied to number of edges **240** by heating device **252,** to shape number of edges **240.**

In another illustrative example, edge shaping system **242** may include mold **254.** Mold **254** may be comprised of one or more mold pieces. Selected portion **236** of feedstock **212** may be placed into mold **254,** which may shape number of edges **240.** For example, mold **254** may be shaped such that forcing selected portion **236** of feedstock **212** into mold **254** shapes number of edges **240.** Applying heat **250** to selected portion **236** of feedstock **212,** while selected portion **236** is in mold **254,** may set the shape of each of number of edges **240.**

In this manner, filler structure **233** may be formed in a number of different ways. Once filler structure **233** has been formed, in some illustrative examples, additional binder **130** may be injected within filler structure **233.** In other illustrative examples, additional binder **130** may be added to blender **218** prior to the mixing of plurality of strips **224** to form feedstock material **226.**

Resin **116** may then be impregnated within filler structure **233** to form filler **108.** As described in **Figure 1****,** filler **108** may be formed such that filler **108** has set of filler properties **109** that substantially match set of properties **110** of composite structure **102.** Further, filler **108** is formed to reduce or prevent the development of undesired inconsistencies within filler **108.**

In other illustrative examples, resin **116** may be impregnated into selected portion **236** of feedstock **212** prior to the shaping of number of edges **240.** In this manner, filler structure **233** may or may not include resin **116.**

In this manner, composite manufacturing system **132** may be used to manufacture composite structure **102** having filler **108** that fills void **107.** Discontinuous filaments **120** may be used to form filler **108** having connectivity propagating in all directions with respect to three dimensions. Three-dimensional fiber matrix **117** comprised of discontinuous filaments **120** may be a three-dimensional network of filaments that may reduce the total amount of fiber required to support filler **108.** This reduced amount of fiber may, in turn, reduce the presence of micro-cracking and enable quicker manufacturing processes. For example, it may be easier to fill void **107** between first composite part **105** and second composite part **106,** which may be dry preforms, with filler **108** having a lower fiber density.

Additionally, three-dimensional fiber matrix **117** may increase the strength of and reduce the weight of filler **108.** Further, filler coefficient of thermal expansion **113** may be reduced and filler coefficient of thermal expansion **113** may be equally present in all directions with respect to three dimensions.

Filler **108** may be uniform in all directions. Consequently, filler **108** may be capable of carrying loads in all directions as needed.

The illustrations of manufacturing environment **100** in **Figure 1** and filler **108** and composite manufacturing system **132** in **Figures 1-2** are not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

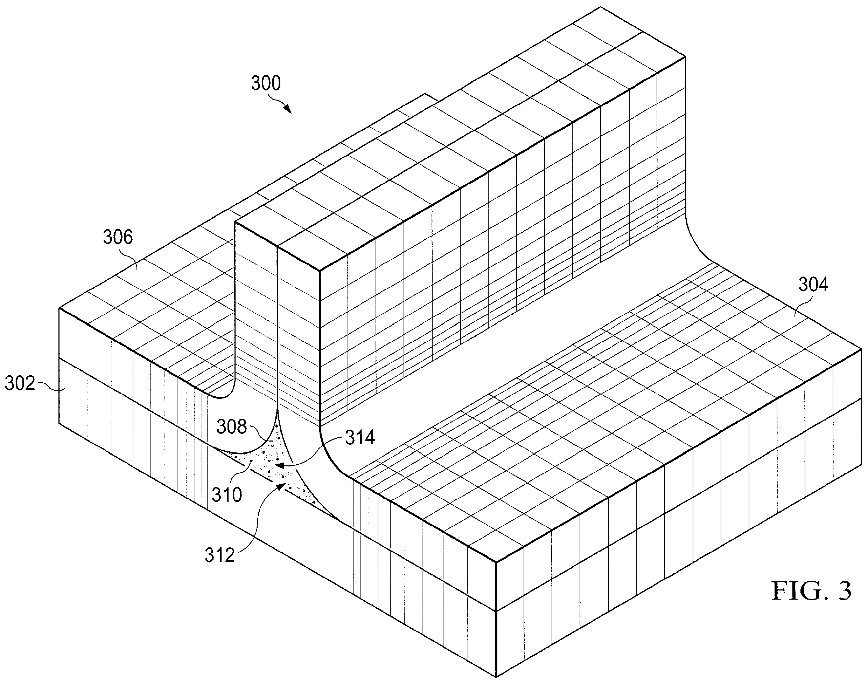

With reference now to **Figure 3****,** an illustration of an isometric view of a composite structure is depicted in accordance with an illustrative embodiment. In this illustrative example, composite structure **300** may be an example of one implementation for composite structure **102** in **Figure 1****.**

As depicted, composite structure **300** may include base **302,** part **304,** and part **306.** Void **308** is created between base **302,** part **304,** and part **306.** Void **308** may be an example of one implementation for void **107** in **Figure 1****.** In this illustrative example, filler **310** is used to substantially fill void **308.** Filler **310** may be an example of one implementation for filler **108 in** **Figures 1-2****.** Filler **108** may be comprised of fiber matrix **312.** Fiber matrix **312** may be comprised of discontinuous filaments **314** that are randomly oriented and entangled with each other such that fiber matrix **312,** and thereby filler **310,** is substantially isotropic. Fiber matrix **312** and discontinuous filaments **314** may be examples of implementations for fiber matrix **115** and discontinuous filaments **120,** respectively, in **Figure 1****.**

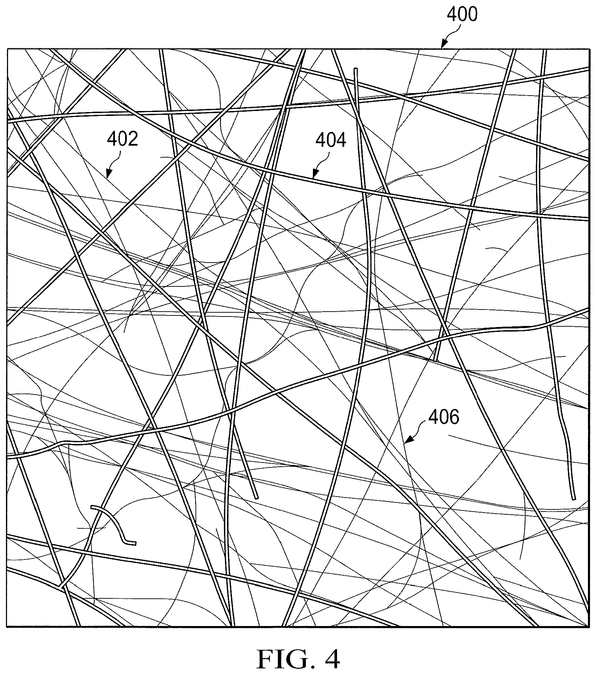

With reference now to **Figure 4****,** an illustration of an enlarged view of a portion of a fiber matrix is depicted in accordance with an illustrative embodiment. Fiber matrix **400** may be an example of one implementation for fiber matrix **115** in **Figure 1****.** As depicted, fiber matrix **400** may include discontinuous filaments **402,** which may be an example of one implementation for discontinuous filaments **120** in **Figure 1****.**

Discontinuous filaments **402** may include first plurality of discontinuous filaments **404** and second plurality of discontinuous filaments **406.** First plurality of discontinuous filaments **404** and second plurality of discontinuous filaments **406** may be examples of implementations for first plurality of discontinuous filaments **122** and second plurality of discontinuous filaments **124,** respectively, in **Figures 1-2****.**

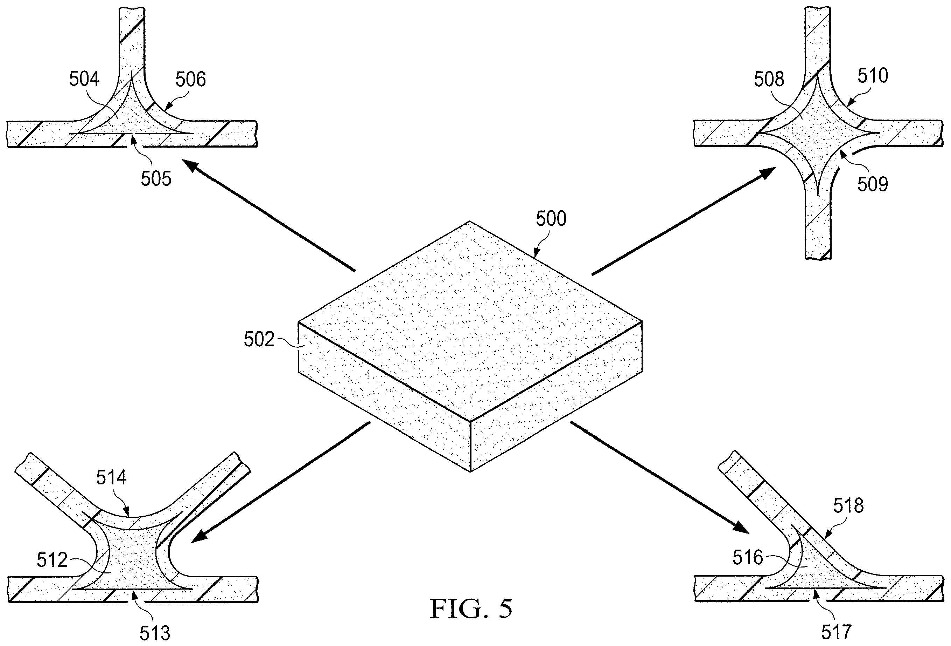

With reference now to **Figure 5****,** an illustration of a feedstock and different types of fillers that may be made from the feedstock is depicted in accordance with an illustrative embodiment. In this illustrative example, feedstock **500** may be an example of one implementation for feedstock **212** in **Figure 2****.** Feedstock **500** may be substantially isotropic and comprised of randomly oriented discontinuous filaments **502.**

In one illustrative example, filler **504** having selected shape **505** may be formed by cutting out a selected portion from feedstock **500** and impregnating this selected portion with resin. As depicted, filler **504** may be used for filling a void within composite structure **506.**

As another illustrative example, filler **508** having selected shape **509** may be formed from feedstock **500** for use in filling a void within composite structure **510.** In yet another illustrative example, filler **512** having selected shape **513** may be formed from feedstock **500** for use in filling a void within composite structure **514.** Further, filler **516** having selected shape **517** may be formed from feedstock **500** for use in filling a void within composite structure **518.** Filler **504,** filler **508,** filler **512,** and filler **516** may each be an example of one implementation for filler **108** in **Figures 1-2****.**

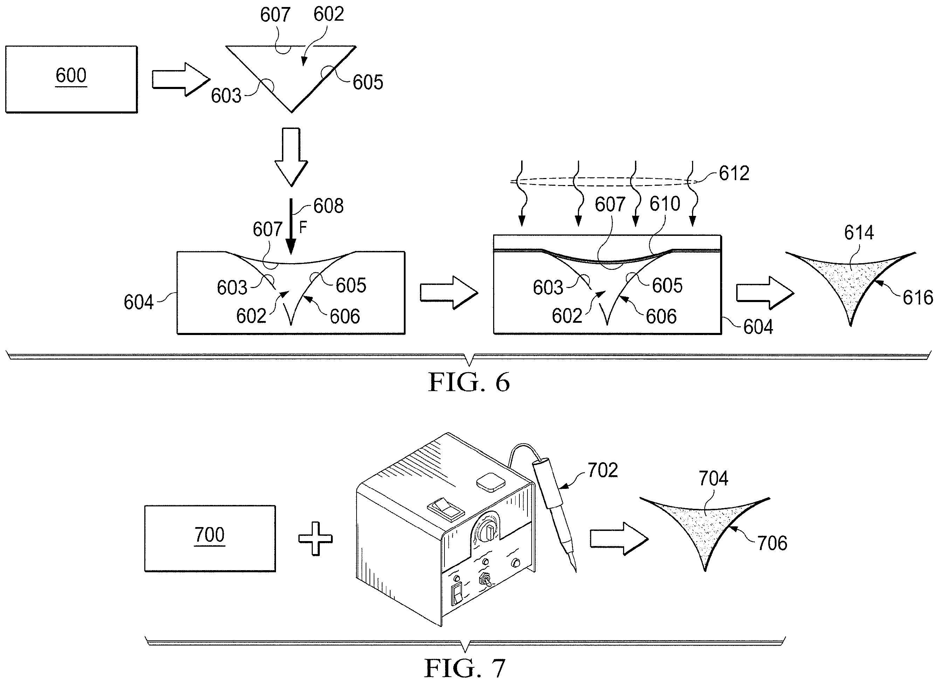

With reference now to **Figure 6****,** an illustration of one manner in which a filler may be formed is depicted in accordance with an illustrative embodiment. In this illustrative example, feedstock **600** may be an example of one implementation for feedstock **212** in **Figure 2****.**

Selected portion **602** may be cut out from feedstock **600** using a cutting device such as, for example, without limitation, cutting device **234** in **Figure 2****.** Selected portion **602** may be an example of one implementation for selected portion **236** in **Figure 2****.**

As depicted, selected portion **602** may include edge **603,** edge **605,** and edge **607.** Resin (not shown) may then be impregnated within selected portion **602.**

Selected portion **602** may be pressed into cavity **606** of mold **604** by applying force **608** to edge **607** of selected portion **602.** Cavity **606** may be shaped such that forcing selected portion **602** into cavity **606** shapes edge **603** and edge **605.** Force **608** applied to edge **607** may also shape edge **607.**

Mold **604** may include plate **610** that is placed over edge **607** to maintain the desired shape for edge **607.** Heat **612** may then be applied to selected portion **602** within mold **604.** Heat **612** may cure selected portion **602** with resin (not shown) infused within selected portion **602** to form filler **614.** Filler **614** may have final shape **616.**

With reference now to **Figure 7****,** an illustration of one manner in which a selected portion of feedstock may be formed is depicted in accordance with an illustrative embodiment. In this illustrative example, feedstock **700** may be an example of one implementation for feedstock **212** in **Figure 2****.** Electronic knife **702** may be used to cut out selected portion **704** having selected shape **706** from feedstock **700.** Electronic knife **702** may be an example of one implementation for cutting device **234** in **Figure 2****.**

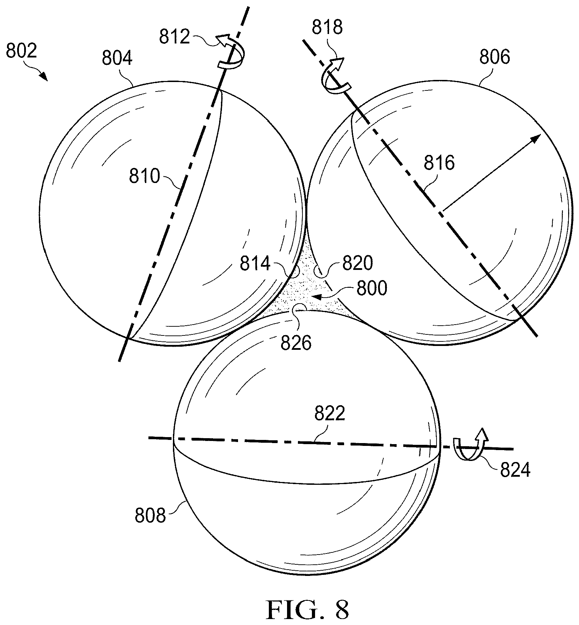

With reference now to **Figure 8****,** an illustration of rollers being used to shape the edges of a selected portion of feedstock is depicted in accordance with an illustrative embodiment. In this illustrative example, selected portion **800** may be an example of one implementation for selected portion **236** of feedstock **212** in **Figure 2****.**

Rollers **802** may be an example of one implementation for number of rollers **244** in **Figure 2****.** Rollers **802** include spherical roller **804,** spherical roller **806,** and spherical roller **808.** In one illustrative example, rollers **802** may be part of a nip roll compression system. Spherical roller **804** may be rotated about axis **810** in the direction of arrow **812** to shape edge **814** of selected portion **800** such that edge **814** substantially conforms to the radius of curvature of spherical roller **804.**

Similarly, spherical roller **806** may be rotated about axis **816** in the direction of arrow **818** to shape edge **820** of selected portion **800** such that edge **820** substantially conforms to the radius of curvature of spherical roller **806.** Further, spherical roller **808** may be rotated about axis **822** in the direction of arrow **824** to shape edge **826** of selected portion **800** such that edge **826** substantially conforms to the radius of curvature of spherical roller **808.**

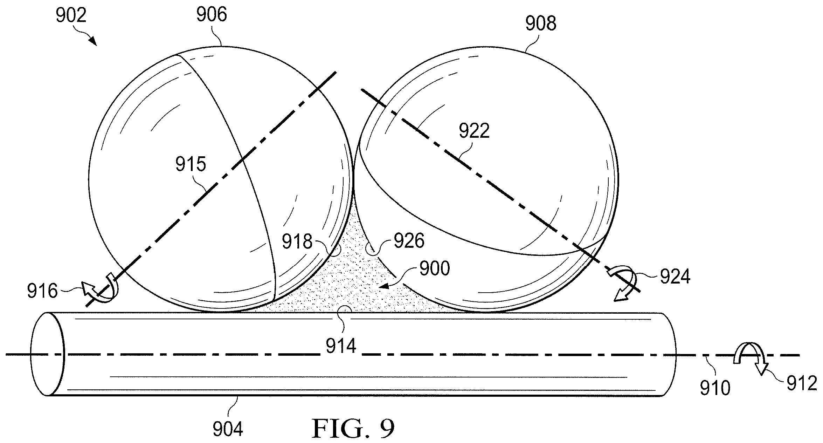

With reference now to **Figure 9****,** an illustration of rollers being used to shape the edges of a selected portion of feedstock is depicted in accordance with an illustrative embodiment. In this illustrative example, selected portion **900** may be an example of one implementation for selected portion **236** of feedstock **212** in **Figure 2****.**

Rollers **902** may be an example of one implementation for number of rollers **244** in **Figure 2****.** In one illustrative example, rollers **902** may be part of a nip roll compression system. Rollers **902** include cylindrical roller **904,** spherical roller **906,** and spherical roller **908.** Cylindrical roller **904** may be rotated about axis **910** in the direction of arrow **912** to shape edge **914** of selected portion **900** such that edge **914** substantially conforms to the radius of curvature of cylindrical roller **904.**

Further, spherical roller **906** may be rotated about axis **915** in the direction of arrow **916** to shape edge **918** of selected portion **900** such that edge **918** substantially conforms to the radius of curvature of spherical roller **906.** Spherical roller **908** may be rotated about axis **922** in the direction of arrow **924** to shape edge **926** of selected portion **900** such that edge **926** substantially conforms to the radius of curvature of spherical roller **908.**

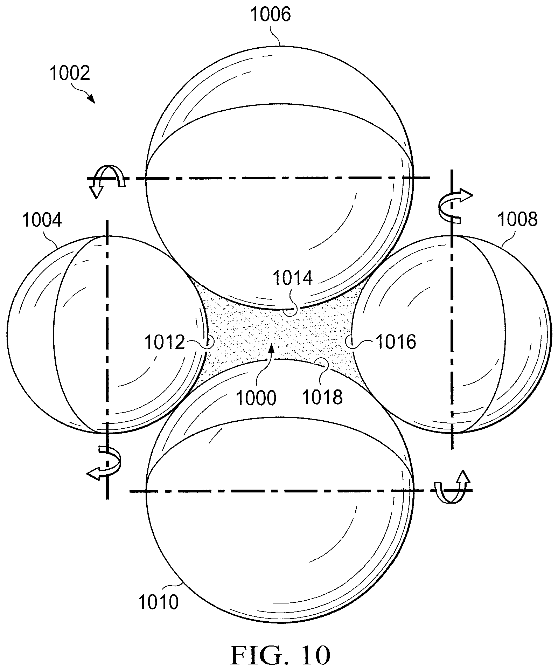

With reference now to **Figure 10****,** an illustration of rollers being used to shape the edges of a selected portion of feedstock is depicted in accordance with an illustrative embodiment. In this illustrative example, selected portion **1000** may be an example of one implementation for selected portion **236** of feedstock **212** in **Figure 2****.**

Rollers **1002** may be an example of one implementation for number of rollers **244** in **Figure 2****.** In one illustrative example, rollers **1002** may be part of a nip roll compression system. Rollers **1002** include spherical roller **1004,** spherical roller **1006,** spherical roller **1008,** and spherical roller **1010.** Spherical roller **1004,** spherical roller **1006,** spherical roller **1008,** and spherical roller **1010** may be used to shape edge **1012,** edge **1014,** edge **1016,** and edge **1018,** respectively, of selected portion **1000.**

The illustrations in **Figures 3-10** are not meant to imply physical or architectural limitations to the manner in which an illustrative embodiment may be implemented. Other components in addition to or in place of the ones illustrated may be used. Some components may be optional.

The different components shown in **Figures 3-10** may be illustrative examples of how components shown in block form in **Figures 1-2** can be implemented as physical structures. Additionally, some of the components in **Figures 3-10** may be combined with components in **Figures 1-2****,** used with components in **Figures 1-2****,** or a combination of the two.

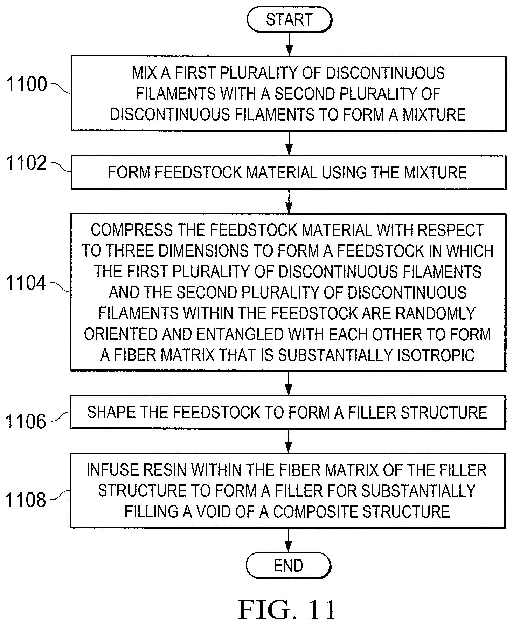

With reference now to **Figure 11****,** an illustration of a process for forming a filler for a void in a composite structure is depicted in the form of a flowchart in accordance with an illustrative embodiment. The process illustrated in **Figure 11** may be used to form filler **108 in** **Figures 1-2****.** In one illustrative example, the process illustrated in **Figure 11** may be implemented using composite manufacturing system **132** in **Figures 1-2****.**

The process may begin by mixing a first plurality of discontinuous filaments with a second plurality of discontinuous filaments to form a mixture (operation **1100).** In one illustrative example, the mixture formed in operation **1100** may be a homogenous mixture. The homogenous mixture may have a uniform composition and uniform properties. In particular, the first plurality of discontinuous filaments and the second plurality of discontinuous filaments may be substantially uniformly distributed throughout the mixture.

Next, feedstock material may be formed using the mixture (operation **1102).** Thereafter, the feedstock material is compressed with respect to three dimensions to form a feedstock in which the first plurality of discontinuous filaments and the second plurality of discontinuous filaments within the feedstock are randomly oriented and entangled with each other to form a fiber matrix that is substantially isotropic (operation **1104).**

The feedstock may be shaped to form a filler structure (operation **1106).** Resin may then be infused within the fiber matrix of the filler structure to form a filler for substantially filling a void of a composite structure (operation **1108),** with the process terminating thereafter.

In some illustrative examples, operation **1108** is not performed. In these examples, the filler structure formed in operation **1106** may form the final filler. This filler may be referred to as a dry filler. This dry filler may be collocated with a first dry preform and a second dry preform to form a composite structure. The dry filler may fill a void between the first dry preform and a second dry preform. Resin may then be infused into the composite structure to form a resin-infused composite structure, which may then be cured to form a fully cured and final composite structure.

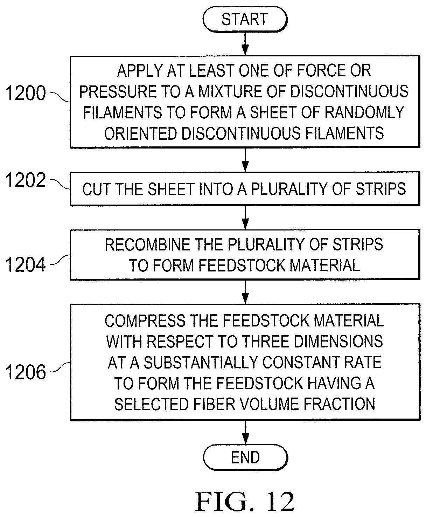

With reference now to **Figure 12****,** an illustration of a process for forming a feedstock is depicted in the form of a flowchart in accordance with an illustrative embodiment. The process illustrated in **Figure 12** may be an example of one manner in which operation **1102** and operation **1104** in **Figure 11** may be performed. Further, this process may be implemented using, for example, without limitation, feedstock forming system **202** in **Figure 2****.**

The process may begin by applying at least one of force or pressure to a mixture of discontinuous filaments to form a sheet of randomly oriented discontinuous filaments (operation **1200).** In operation **1200,** the mixture may be the mixture formed in operation **1100** in **Figure 11****.** This mixture may be a substantially homogenous mixture.

The sheet may then be cut into a plurality of strips (operation **1202).** The plurality of strips may be recombined to form feedstock material (operation **1204).** In one illustrative example, operation **1204** may be performed using a blender to blend together the plurality of strips to form feedstock material.

The feedstock material may be compressed with respect to three dimensions at a substantially constant rate to form a feedstock having a selected fiber volume fraction (operation **1206),** with the process terminating thereafter. In operation **1206,** the selected fiber volume fraction may be, for example, without limitation, between about 5 percent and about 60 percent. In some cases, in operation **1206,** the feedstock material may be compressed at a substantially constant rate in directions corresponding to the three dimensions.

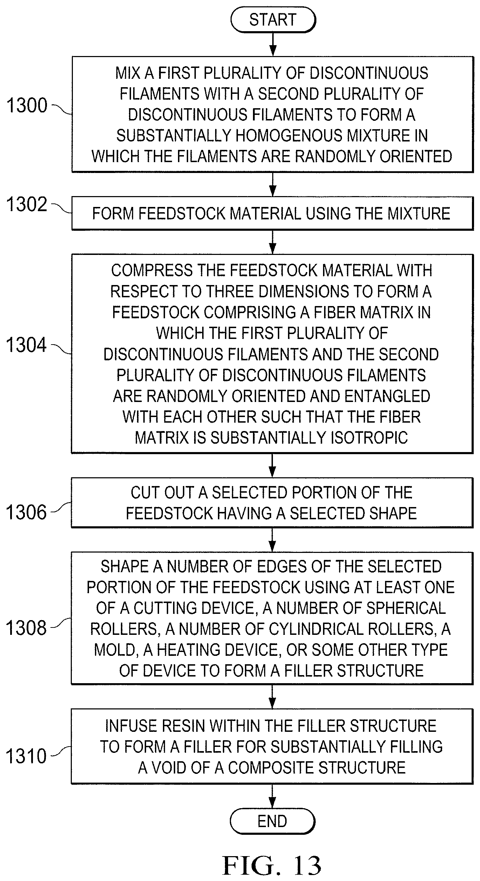

With reference now to **Figure 13****,** an illustration of a more detailed process for forming a filler for a void in a composite structure is depicted in the form of a flowchart in accordance with an illustrative embodiment. The process illustrated in **Figure 13** may be used to form filler 108 in **Figures 1-2****.** In one illustrative example, the process illustrated in **Figure 11** may be implemented using composite manufacturing system **132** in **Figures 1-2****.**

The process may begin by mixing a first plurality of discontinuous filaments with a second plurality of discontinuous filaments to form a substantially homogenous mixture in which the filaments are randomly oriented (operation **1300).** Next, the mixture may be used to form feedstock material (operation **1302).**

The feedstock material may be compressed with respect to three dimensions to form a feedstock comprising a fiber matrix in which the first plurality of discontinuous filaments and the second plurality of discontinuous filaments are randomly oriented and entangled with each other such that the fiber matrix is substantially isotropic (operation **1304).** The fiber matrix may be a three-dimensional fiber matrix.

A selected portion having a selected shape may then be cut out of the feedstock (operation **1306).** A number of edges of the selected portion of the feedstock may be shaped using at least one of a cutting device, a number of spherical rollers, a number of cylindrical rollers, a mold, a heating device, or some other type of device to form a filler structure (operation **1308).** Resin may be infused within the filler structure to form a filler for substantially filling a void of a composite structure (operation **1310),** with the process terminating thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

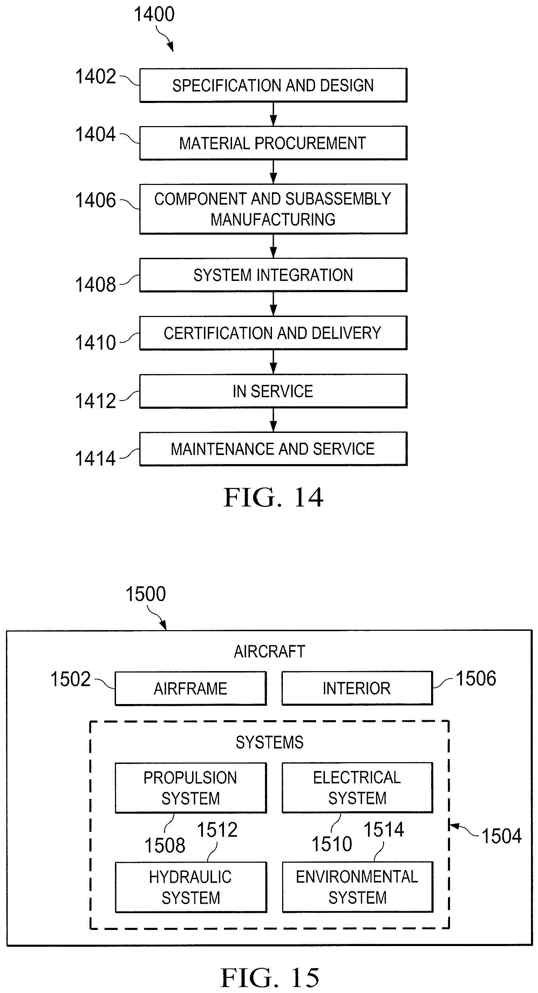

The illustrative embodiments of the disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method is depicted in the form of a block diagram in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** in **Figure 15** takes place. Thereafter, aircraft **1500** in **Figure 15** may go through certification and delivery **1410** in order to be placed in service **1412.** While in service **1412** by a customer, aircraft **1500** in **Figure 15** is scheduled for routine maintenance and service **1414,** which may include modification, reconfiguration, refurbishment, and other maintenance or service.

Each of the processes of aircraft manufacturing and service method **1400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of an aircraft is depicted in the form of a block diagram in which an illustrative embodiment may be implemented. In this example, aircraft **1500** is produced by aircraft manufacturing and service method **1400** in **Figure 14** and may include airframe **1502** with plurality of systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative embodiments may be applied to other industries, such as the automotive industry.

The apparatuses and methods embodied herein may be employed during at least one of the stages of aircraft manufacturing and service method **1400** in **Figure 14****.** In particular, filler **108** from **Figure** 1 may be manufactured and used during any one of the stages of aircraft manufacturing and service method **1400.** For example, without limitation, filler **108** from **Figure 1** may be manufactured, used, or both during at least one of material procurement **1404,** component and subassembly manufacturing **1406,** system integration **1408,** routine maintenance and service **1414,** or some other stage of aircraft manufacturing and service method **1400.** Still further, fillers, such as filler **108** from **Figure 1****,** may be used to fill voids in composite structures that form airframe **1502** or interior **1506** of aircraft **1500.**

In one illustrative example, components or subassemblies produced in component and subassembly manufacturing **1406** in **Figure 14** may be fabricated or manufactured in a manner similar to components or subassemblies produced while aircraft **1500** is in service **1412** in **Figure 14****.** As yet another example, one or more apparatus embodiments, method embodiments, or a combination thereof may be utilized during production stages, such as component and subassembly manufacturing **1406** and system integration **1408** in **Figure 14****.** One or more apparatus embodiments, method embodiments, or a combination thereof may be utilized while aircraft **1500** is in service **1412** and/or during maintenance and service **1414** in **Figure 14****.** The use of a number of the different illustrative embodiments may substantially expedite the assembly of and/or reduce the cost of aircraft **1500.**

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for manufacturing a filler (108) for a composite structure (102), the method comprising:
mixing (1100) a first plurality of discontinuous filaments (122) with a second plurality of discontinuous filaments (124) to form a mixture (206);
forming (1102) feedstock material (126) using the mixture (206);
compressing (1104) the feedstock material (226) to form a feedstock (122) in which discontinuous filaments (120) of the first plurality of discontinuous filaments (122) and the second plurality of discontinuous filaments (124) within the feedstock (212) are randomly oriented and entangled with each other to form a fiber matrix (115) that is uniform in all directions; and
shaping (1106) the feedstock (212) to form a filler structure (233) for use in forming the filler (108), wherein mixing (1100) the first plurality of discontinuous filaments (122) with the second plurality of discontinuous filaments (124) comprises:
mixing the first plurality of discontinuous filaments (122) comprised of a stiffening material (126) with the second plurality of discontinuous filaments (124) comprised of a binding material (128),
cutting (1306) out a selected portion (236) of the feedstock (212) having a selected shape (238),
wherein shaping the feedstock (212) further comprises: shaping a number of edges (240) of the selected portion (236) of the feedstock (212) to form the filler structure comprising using a number of spherical rollers (244).

2. The method of claim 1, wherein mixing (1100) the first plurality of discontinuous filaments (122) comprised of the stiffening material (126) with the second plurality of discontinuous filaments (124) comprised of the binding material (128) comprises:
mixing the first plurality of discontinuous filaments (122) with the second plurality of discontinuous filaments (124) to form a substantially homogenous mixture (208).

3. The method of any of claims 1 to 2, wherein compressing (1104) the feedstock material (226) comprises:
compressing (1206) the feedstock material (226) with respect to three dimensions at a substantially constant rate to form the feedstock (212).

4. The method of any of claims 1 to 3, wherein compressing (1104) the feedstock material (226) comprises:
compressing the feedstock material (226) with respect to three dimensions to form the feedstock (212) having a selected fiber volume fraction (232) between about 5 percent and about 80 percent, wherein the feedstock (212) is uniform in all directions.

5. The method of any of claims 1 to 4 further comprising:
adding an additional binder (130) into the filler structure (223) to form the filler (108).

6. The method of claim 5 further comprising:
impregnating the filler structure (223) with a resin (116) to form the filler (108).

7. An apparatus obtainable by the method of any of claims 1 to 6, the apparatus comprising:
the filler (108) comprising a fiber matrix (115) that is uniform in all directions, wherein the fiber matrix (115) comprises:
the first plurality of discontinuous filaments (122) in which each filament (122) of the first plurality of discontinuous filaments (122) is comprised of a stiffening material (126); and
the second plurality of discontinuous filaments (124) in which each filament (124) of the second plurality of discontinuous filaments (124) is comprised of a binding material (128),
wherein discontinuous filaments (120) of both the first plurality of discontinuous filaments (122) and the second plurality of discontinuous filaments (124) are randomly oriented and entangled with each other.

8. The apparatus of claim 7, wherein the stiffening material (126) comprises at least one of carbon, silica, glass, boron, a para-aramid synthetic fiber, a polyimide, a ceramic material, or a metallic material.

9. The apparatus of claim 7 or 8, wherein the binding material comprises (128) at least one of a thermoplastic material or a thermoset material.

10. The apparatus of claim 9, wherein the thermoplastic material comprises an acrylic material, a fluorocarbon, a polyamide, a polyolefin such as polyethylene or polypropylene, a polyester, a polycarbonate, a polyurethane, or a polyaryletherketone.

11. The apparatus of claim 9, wherein the thermoset material comprises a polyurethane, a phenolic material, a polymide, a sulphonated polymer, a conductive polymer, a benzoxazine, a bismaleimide, a cyanate ester, a polyester, an epoxy, or a silsesquioxane.

12. The apparatus of any of claims 7 to 11, wherein the filler (108) is used for substantially filling a void (107) of a composite structure (102) and wherein the filler (108) has a set of filler properties (109) that substantially match a set of properties (110) of the composite structure (102), preferably wherein the set of filler properties (110) includes a coefficient of thermal expansion (111) and stiffness (112).

13. The apparatus of any of claims 7 to 12, wherein the filler (108) further comprises:
a resin (116) infused within the fiber matrix (115).

14. The apparatus of any of claims 7 to 13, wherein the filler (108) further comprises:
An additional binder (130) within the fiber matrix (115) to toughen the filler (108).

15. The apparatus of any of claims 7 to 14, wherein each of the discontinuous filaments (120) has a length of at least about one millimeter.

## Patentansprüche

1. Verfahren zur Herstellung eines Füllers (108) für eine Verbundstruktur (102), wobei das Verfahren aufweist:
Mischen (1100) einer ersten Vielzahl von diskontinuierlichen Fäden (122) mit einer zweiten Vielzahl von diskontinuierlichen Fäden (124), um eine Mischung (206) zu bilden;
Bilden (1102) eines Ausgangsmaterials (126) unter Verwendung der Mischung (206);
Verdichten (1104) des Ausgangsmaterials (226) zum Bilden eines Rohstoffs (122), in welchem diskontinuierliche Fäden (120) der ersten Vielzahl von diskontinuierlichen Fäden (122) und der zweiten Vielzahl von diskontinuierlichen Fäden (124) innerhalb des Rohstoffs (212) zufällig orientiert und miteinander verflochten sind, um eine Fasermatrix (115) zu bilden, die in allen Richtungen gleichförmig ist; und
Formen (1106) des Rohstoffs (212), um eine Füllstruktur (233) zur Verwendung beim Bilden des Füllers (108) zu bilden, wobei das Mischen (1100) der ersten Vielzahl von diskontinuierlichen Fäden (122) mit der zweiten Vielzahl von diskontinuierlichen Fäden (124) aufweist:
Mischen der ersten Vielzahl von diskontinuierlichen Fäden (122), die ein Versteifungsmaterial (126) aufweisen, mit der zweiten Vielzahl von diskontinuierlichen Fäden (124), die ein Bindematerial (128) aufweisen,
Herausschneiden (1306) eines ausgewählten Teils (236) des Rohstoffs (212), der eine ausgewählte Form (238) aufweist,
wobei das Formen des Rohstoffs (212) ferner aufweist: Formen einer Anzahl von Rändern (240) des ausgewählten Teils (236) des Rohstoffs (212), um die Füllstruktur zu bilden, was ein Verwenden einer Anzahl von sphärischen Rollen (244) umfasst.

2. Verfahren nach Anspruch 1, wobei ein Mischen (1100) der ersten Vielzahl von diskontinuierlichen Fäden (122), die das Versteifungsmaterial (126) aufweisen, mit der zweiten Vielzahl von diskontinuierlichen Fäden (124), die das Bindematerial (128) aufweisen, aufweist:
Mischen der ersten Vielzahl von diskontinuierlichen Fäden (122) mit der zweiten Vielzahl von diskontinuierlichen Fäden (124), um eine im Wesentlichen homogene Mischung (208) zu bilden.

3. Verfahren nach einem der Ansprüche 1 bis 2, wobei das Verdichten (1104) des Ausgangsmaterials (226) aufweist:
Verdichten (1206) des Ausgangsmaterials (226) in Bezug auf drei Dimensionen mit einer im Wesentlichen konstanten Geschwindigkeit, um den Rohstoff (212) zu bilden.

4. Verfahren nach einem der Ansprüche 1 bis 3, wobei das Verdichten (1104) des Ausgangsmaterials (226) aufweist:
Verdichten des Ausgangsmaterials (226) in Bezug auf drei Dimensionen, um den Rohstoff (212) zu bilden, der einen ausgewählten Faservolumenanteil (232) zwischen etwa 5 Prozent und etwa 80 Prozent aufweist, wobei der Rohstoff (212) in allen Richtungen gleichförmig ist.

5. Verfahren nach einem der Ansprüche 1 bis 4, das ferner aufweist:
Hinzufügen eines zusätzlichen Bindemittels (130) in die Füllstruktur (223), um den Füller (108) zu bilden.

6. Verfahren nach Anspruch 5, das ferner aufweist:
Imprägnieren der Füllstruktur (223) mit einem Harz (116), um den Füller (108) zu bilden.

7. Vorrichtung, die durch das Verfahren nach einem der Ansprüche 1 bis 6 erhältlich ist, wobei die Vorrichtung aufweist:
den Füller (108), der eine Fasermatrix (115) aufweist, die in allen Richtungen gleichförmig ist, wobei die Fasermatrix (115) aufweist:
die erste Vielzahl von diskontinuierlichen Fäden (122), wobei jeder Faden (122) der ersten Vielzahl von diskontinuierlichen Fäden (122) ein Versteifungsmaterial (126) aufweist; und
die zweite Vielzahl von diskontinuierlichen Fäden (124), wobei jeder Faden (124) der zweiten Vielzahl von diskontinuierlichen Fäden (124) ein Bindematerial (128) aufweist,
wobei diskontinuierliche Fäden (120) von sowohl der ersten Vielzahl von diskontinuierlichen Fäden (122) als auch von der zweiten Vielzahl von diskontinuierlichen Fäden (124) zufällig orientiert und miteinander verflochten sind.

8. Vorrichtung nach Anspruch 7, wobei das Versteifungsmaterial (126) Kohlenstoff, Silizium, Glas, Bor, eine synthetischen Para-Aramid-Faser, ein Polyimid, ein keramisches Material und/oder ein metallisches Material aufweist.

9. Vorrichtung nach Anspruch 7 oder 8, wobei das Bindematerial (128) ein thermoplastisches Material und/oder ein wärmehärtendes Material aufweist.

10. Vorrichtung nach Anspruch 9, wobei das thermoplastische Material ein Acrylmaterial, einen Fluorkohlenstoff, ein Polyamid, ein Polyolefin wie etwa Polyethylen oder Polypropylen, einen Polyester, ein Polycarbonat, ein Polyurethan oder ein Polyaryletherketon aufweist.

11. Vorrichtung nach Anspruch 9, wobei das wärmehärtende Material ein Polyurethan, ein phenolisches Material, ein Polyimid, ein sulfoniertes Polymer, ein leitfähiges Polymer, ein Benzoxazin, ein Bismaleimid, einen Cyanatester, einen Polyester, ein Epoxid oder ein Silsesquioxan aufweist.

12. Vorrichtung nach einem der Ansprüche 7 bis 11, wobei der Füller (108) zum im Wesentlichen Füllen eines Hohlraums (107) einer Verbundstruktur (102) verwendet wird und wobei der Füller (108) einen Satz von Füllereigenschaften (109) aufweist, die im Wesentlichen zu einem Satz von Eigenschaften (110) der Verbundstruktur (102) passen, wobei der Satz von Füllereigenschaften (110) vorzugsweise einen Koeffizienten einer Wärmeausdehnung (111) und eine Steifigkeit (112) umfasst.

13. Vorrichtung nach einem der Ansprüche 7 bis 12, wobei der Füller (108) ferner aufweist:
ein Harz (116), das in die Fasermatrix (115) gegossen ist.

14. Vorrichtung nach einem der Ansprüche 7 bis 13, wobei der Füller (108) ferner aufweist:
ein zusätzliches Bindemittel (130) innerhalb der Fasermatrix (115), um den Füller (108) zu härten.

15. Vorrichtung nach einem der Ansprüche 7 bis 14, wobei jeder der diskontinuierlichen Fäden (120) eine Länge von zumindest etwa einem Millimeter aufweist.

## Revendications

1. Procédé destiné à la fabrication d'une charge (108) pour une structure composite (102), le procédé comprenant :
le mélange (1100) d'une première pluralité de filaments discontinus (122) avec une seconde pluralité de filaments discontinus (124) pour former un mélange (206) ;
la formation (1102) d'une matière première (126) à l'aide du mélange (206) ;
la compression (1104) de la matière première (226) pour former une charge d'alimentation (122) dans laquelle des filaments discontinus (120) de la première pluralité de filaments discontinus (122) et de la seconde pluralité de filaments discontinus (124) au sein de la charge d'alimentation (212) sont orientés de manière aléatoire et enchevêtrés les uns avec les autres pour former une matrice de fibres (115) qui est uniforme dans toutes les directions ; et
la mise en forme (1106) de la charge d'alimentation (212) pour former une structure de charge (233) à utiliser pour former la charge (108), dans lequel le mélange (1100) de la première pluralité de filaments discontinus (122) avec la seconde pluralité de filaments discontinus (124) comprend :
le mélange de la première pluralité de filaments discontinus (122) constitués d'un matériau de raidissement (126) avec la seconde pluralité de filaments discontinus (124) constitués d'un matériau de liaison (128),
la découpe (1306) d'une partie sélectionnée (236) de la charge d'alimentation (212) ayant une forme sélectionnée (238),
dans lequel la mise en forme de la charge d'alimentation (212) comprend en outre : la mise en forme d'un certain nombre de bords (240) de la partie sélectionnée (236) de la charge d'alimentation (212) pour former la structure de remplissage comprenant l'utilisation d'un certain nombre de rouleaux sphériques (244).

2. Procédé selon la revendication 1, dans lequel le mélange (1100) de la première pluralité de filaments discontinus (122) constitués du matériau de raidissement (126) avec la seconde pluralité de filaments discontinus (124) constitués du matériau de liaison (128) comprend :
le mélange de la première pluralité de filaments discontinus (122) avec la seconde pluralité de filaments discontinus (124) pour former un mélange sensiblement homogène (208).

3. Procédé selon l'une quelconque des revendications 1 à 2, dans lequel la compression (1104) de la matière première (226) comprend :
la compression (1206) de la matière première (226) en trois dimensions à une vitesse sensiblement constante pour former la charge d'alimentation (212).

4. Procédé selon l'une quelconque des revendications 1 à 3, dans lequel la compression (1104) de la matière première (226) comprend :
la compression de la matière première (226) en trois dimensions pour former la charge d'alimentation (212) ayant une fraction volumique de fibres sélectionnée (232) comprise entre environ 5 pour cent et environ 80 pour cent, dans lequel la charge d'alimentation (212) est uniforme dans toutes les directions.

5. Procédé selon l'une quelconque des revendications 1 à 4, comprenant en outre : l'ajout d'un liant supplémentaire (130) dans la structure de charge (223) pour former la charge (108).

6. Procédé selon la revendication 5, comprenant en outre : l'imprégnation de la structure de charge (223) d'une résine (116) pour former la charge (108).

7. Appareil susceptible d'être obtenu par le procédé selon l'une quelconque des revendications 1 à 6, l'appareil comprenant :
la charge (108) comprenant une matrice de fibres (115) qui est uniforme dans toutes les directions, dans lequel la matrice de fibres (115) comprend :
la première pluralité de filaments discontinus (122) dans lesquels chaque filament (122) de la première pluralité de filaments discontinus (122) est constitué d'un matériau de raidissement (126) ; et
la seconde pluralité de filaments discontinus (124) dans lesquels chaque filament (124) de la seconde pluralité de filaments discontinus (124) est constitué d'un matériau de liaison (128),
dans lequel des filaments discontinus (120) à la fois de la première pluralité de filaments discontinus (122) et de la seconde pluralité de filaments discontinus (124) sont orientés de manière aléatoire et enchevêtrés les uns avec les autres.

8. Appareil selon la revendication 7, dans lequel le matériau de raidissement (126) comprend au moins l'un parmi du carbone, de la silice, du verre, du bore, une fibre synthétique para-aramide, un polyimide, un matériau céramique ou un matériau métallique.

9. Appareil selon la revendication 7 ou 8, dans lequel le matériau de liaison comprend (128) au moins l'un parmi un matériau thermoplastique ou un matériau thermodurcissable.

10. Appareil selon la revendication 9, dans lequel le matériau thermoplastique comprend un matériau acrylique, un fluorocarbure, un polyamide, une polyoléfine telle que du polyéthylène ou du polypropylène, un polyester, un polycarbonate, un polyuréthane ou une polyaryléthercétone.

11. Appareil selon la revendication 9, dans lequel le matériau thermodurcissable comprend un polyuréthane, un matériau phénolique, un polyimide, un polymère sulfoné, un polymère conducteur, une benzoxazine, un
bismaléimide, un ester de cyanate, un polyester, un époxy ou un silsesquioxane.

12. Appareil selon l'une quelconque des revendications 7 à 11, dans lequel la charge (108) est utilisée pour remplir sensiblement un vide (107) d'une structure composite (102) et dans lequel la charge (108) a un ensemble de propriétés de charge (109) qui correspondent sensiblement à un ensemble de propriétés (110) de la structure composite (102), de préférence dans lequel l'ensemble de propriétés de charge (110) comporte un coefficient de dilatation thermique (111) et une rigidité (112).

13. Appareil selon l'une quelconque des revendications 7 à 12, dans lequel la charge (108) comprend en outre :
une résine (116) infusée au sein de la matrice de fibres (115).

14. Appareil selon l'une quelconque des revendications 7 à 13, dans lequel la charge (108) comprend en outre :
un liant supplémentaire (130) au sein de la matrice de fibres (115) pour renforcer la charge (108).

15. Appareil selon l'une quelconque des revendications 7 à 14, dans lequel chacun des filaments discontinus (120) a une longueur d'au moins un millimètre environ.
